# EUROPEAN PATENT SPECIFICATION

(11) **EP 2 762 045 B1**
(45) Date of publication and mention of the grant of the patent: **23.09.2015**
(21) Application number: 14166294.0
(22) Date of filing: 23.12.2011
(51) Int. Cl.: A47J 27/16

(54) **Pressurized steam cooker**
Druckdampfgarer
Cuiseur à vapeur pressurisé

(43) Date of publication of application: 06.08.2014
(62) Divisional of application: 11195587.8
(73) Proprietor: Schmidt, Katrin, 91301 Forchheim (DE)
(72) Inventor: Schmidt, Katrin, 91301 Forchheim (DE)
(74) Representative: Appelt, Christian W.

(56) References cited:
- DE-U1- 9 401 825
- US-A- 3 992 984
- US-A- 5 279 212
- US-A1- 2011 256 287

## Description

The present invention relates to a pressurized steam cooker and, more particular, to a food steamer with a continuous flow vaporizer to generate a pressurized steam for cooking.

### Background of the Invention

Conventional cookers rely on many different heating systems utilizing pressurized or non-pressurized steam. For example, pressure cookers with direct electric heating are widely available in many households. In these devices the high pressure requires particular locking mechanisms and, in addition, need a secure way to release the hot steam from the pressure cooker. Finally, conventional cookers are also available, which do not use steam at high pressure, but operate at normal atmospheric pressure so that no additional locking mechanisms are needed for such cookers.

The conventional cookers have a number of disadvantages. For example, pressure cookers need more water inside the cooker - also during the cooking. Consequently, they need a long period of time to heat the water at first before the water evaporates and the pressure increases. In addition, before heating the water the cooking pots have to be heated at first (typically via the base portion of the cooking pot). Moreover, due to the large amount of hot water and the heated material of the cooking pot they also need a long time after the cooking before the cooking pots can be safely opened.

On the other hand, the unpressured steam cooker can only use a temperature of a maximum of 100°C and thus need longer time to cook the dishes. In addition, the conventional pressurized steam cookers have a high consumption of energy, need a long time for pre-heating and a long time to cool down. Finally, conventional steam pressurized cookers have a large cooking container and need a water source and a water drain to discharge the water after cooking.

Pressurized steam cookers are known from DE 94 01 825 U.

Therefore, there is the need to provide a pressurized steam cooker to overcome the aforesaid problems.

### Summary of the Invention

The aforesaid problems are solved by a pressurized steam cooker according to claim 1. Claims 2-14 refer to specifically advantageous realizations of the subject matter of claim 1.

A pressurized steam cooker according to the present invention comprises a heater, a pressure container and a control unit. The heater comprises a water inlet and a steam outlet. The heater is configured to evaporate the water into the steam and to provide the steam to the outlet with a steam pressure of at least a minimum pressure. The pressure container is configured for accommodating a food receptacle for food. The pressure container comprises a steam inlet connected to the steam outlet of the heater and a temperature sensor configured to determine a temperature of the steam in the pressure container. The control unit is configured to obtain the temperature from the temperature sensor and to control the heater such that the temperature comprises at least a minimum temperature to cook the food in the food receptacle. The pressure container is separated from the heater and is closable to expose the food to the steam under the steam pressure.

Optionally, the heater may comprise a further temperature sensor, which may determine the temperature of a heating block in the heater and therewith the temperature of the generated steam and provides the determined temperature to the control unit.

The pressure inside the pressure container can be effectively and quickly decreased by simply introducing cold or liquid water. Therefore, further embodiments relate to a pressurized steam cooker, wherein the control unit is configured to lower the steam pressure inside the pressure container by introducing liquid water in the pressure container.

The cleaning of the pressure container is simplified if the pressure container is not fixed directly to the heater, but when both components are detachable from each other. A detachable pressure container is further advantageous in that pressure containers with different volumes or size can be connected to a given heater, thereby defining a modular system wherein a user can combine different components in accordance to particular demands. Therefore, in further embodiments the pressurized steam cooker further comprises a pressure tube of deformable or non-deformable material connecting the steam outlet and the steam inlet and the pressure tube may optionally be detachable from the container inlet.

A simple tool for controlling the steam pressure is a pump, which pumps water with a particular pressure and which can be controlled easily. Therefore, in further embodiments the heater comprises a heating block and a further temperature sensor for determining a temperature of the said heating block, and the pressurized steam cooker further comprises a pump configured to provide the water to the heating block inside the heater with a pressure based on the steam pressure. The control unit is configured to control the heater such that the heating block comprises at least the boiling temperature of water under the steam pressure and thus may differ from 100°C. If, e.g., the pump provides more water, than also more steam is generated and since the volume is constant, the pressure is increased.

The water for the pump can be directly provided by a water source (e.g. connected to a water tap). Alternatively, it is also possible to provide a particular water container, which may also be detachable from the system to simplify the cleaning and the filling of water in the water container. Therefore, further embodiments relate to a pressurized steam cooker comprising a detachable water container configured to provide the water to the pump. In yet further embodiments the pressurized steam cooker comprises a check valve provided between the pump and the heater to block a water flow from the heater to the pump. The optional check valve has the effect that the pressure can be more reliably generated and maintained even when the pump is not operating. The water container may comprise transparent or intransparent material (e.g. made of plastic material or glass or likewise suitable material). In addition, a control lamp and/or a sensor to measure the water level inside the container may be provided so that the user can be warned in case the water level in the water container reaches or is below a lower threshold indicating that a sufficient amount of water for cooking a dish is not available.

Since no liquid water is contained in the pressure container (at least when it is operated in the optimal modus), it is not possible to simply add spices (which could be added to the cooking water). Therefore, further embodiments relate to a pressurized steam cooker further comprising a spice container for accommodating spices. The spice container may be arranged between the heater and the pressure container such that the steam from the heater passes the spices before entering the pressure container. Thereby it becomes possible to flavor the dishes by simply placing the spices in the steam flow so that the steam flow carries the spice flavor to the food in the pressure container. It may also be possible to add different spice containers for different spices - again supporting the modular arrangement as mentioned before.

For obtaining a good cooking result, apart from the correct temperature, also the pressure applied during the cooking is important and the mutual ratio of pressure, time and temperature ought to be adjusted accordingly. For example, particular dishes may cook in shorter time, when the pressure is increased accordingly. Therefore, in order to survey the pressure, in further embodiments the pressure container comprises a pressure sensor for determining the steam pressure inside the pressure container. In further embodiments the control unit may control the pressure by controlling the pump (e.g. to provide more or less water to the heater).

When operating the pressurized heater, the steam may partially condense at the outer side walls and the bottom portion of the pressure container or the food itself when the hot steam enters the cold pressure container. This condensed water is not usable for the cooking process of the food and should evaporate again. In order to support this evaporation and thus improving the efficiency of the cooking process, in further embodiments the pressure container comprises a thermal isolation at a side wall and at a bottom portion of the pressure container. This isolation has the effect that temperature inside increases faster above the minimum temperature which is above the boiling temperature of water and thus evaporates the condensed water.

To further support the evaporation process, an additional heating may be provided at the bottom part so that during ideal operation, no liquid water is inside the pressure container. Therefore, further embodiments relate to a steam cooker further comprising an additional heating arranged at the pressure container, the additional heating being configured to evaporate condensed water inside the pressure container.

A correct controlling of the pressure is important for the cooking process. In order to maintain at least a minimum pressure in the pressure container, the pressure container should be closed securely, e.g., by a lid or any other cover or cap, which may, moreover, comprise a window to monitor the cooking process. The window may be arranged in the lid or the side wall of the pressure container. Therefore, further embodiments relate to a pressurized steam cooker further comprising a lid for closing the pressure container, the lid being configured to provide a sealing up to a maximum pressure inside the pressure container. In further embodiments the pressurized steam cooker further comprises a lid sensor for blocking an opening operation of the lid until the steam pressure has dropped at least below a lower threshold value, where an opening is safe. The lid may be equipped with an electronical or mechanical locking mechanism and a closure sensor. By controlling those, the control unit can prevent steam production e.g. if the lid is not properly locked or inhibit an opening of the lid while there is still a hazardous pressure level inside the pressure container.

In further embodiments, the steam inlet in the pressure container may be formed in a side wall of the pressure container spaced from the bottom portion of the pressure container. For example, it can be formed in a lower or upper portion of the side wall or, optionally, also in the lid.

Before opening the pressure container, a cooling process is needed. This can, e.g., be achieved by bringing cold water (e.g. having a temperature below 60°C or liquid water) in the pressure container. The cold water may be pumped directly through the heater into the pressure container. Further embodiments relate to a pressurized steam cooker further comprising a bypass being adapted to provide a further flow path for water from the water container to the pressure container, wherein the control unit is configured to direct water along the bypass to the pressure container to lower the steam pressure by inflowing water. In further embodiments along the bypass an optional further pump and an optional further check valve are arranged to provide a directed flow of water from the water container to the pressure container and to maintain the pressure in the pressure container during operation.

After the cooking process the hot steam is condensed by the cold water which was pumped into the pressure container and which may be discharged before the pressure container is opened. Since the condensed water may still comprise a high temperature, a direct opening of the pressure container is not safe (in particular for children). Therefore, further embodiments relate a pressurized steam cooker further comprising a condensed water container, and the pressure container comprises a discharge valve being in fluid connection to the condensed water container and being configured to discharge condensed water inside the pressure container into the condensed water container.

Finally, the different parameters (as, e. g., the pressure, the temperature, the cooking time period, etc.) are not independent from each other but are interrelated. Therefore, it is advantageous if the control unit controls a plurality of parameters to optimize the whole cooking process. Therefore, in further embodiments the control unit is also configured to control at least one device selected from a group consisting of: the lid sensor, the pump, the additional heating, the additional pump, and the discharge valve. For this controlling additional control lines may be arranged to connect the control unit with the different devices.

The control unit can reduce overpressure inside the pressure container in different ways. First, by deactivating the pump and/or the heater and thereby avoiding the generation of further steam. Second, by activating the additional pump to transport cold water into the pressure container and condensing the contained steam partially or completely. Or third, by opening the discharge valve and let some of the contained steam escape into the condensed water container.

Embodiments of the present invention provide the following advantages over conventional cookers. At first, the size of the pressurized steam cooker can be easily adjusted to the food portions of a single household or a small household. For example, by arranging the steam generation in the heater and the pressure container in different components, the pressure container can either be configured to be detachable from the heater (e.g. from the pressure tube) or pressure containers with different sizes can easily be manufactured and connected to the heater. Therefore, further embodiments relate also to pressure containers suitable for larger households (e.g. with three or more persons).

In addition, a very fast preparation of the food is possible, because the steam is generated directly and the pressure of the steam increases very quickly (e.g. in that the heater has only a small volume). In addition, the cooking pot (pressure container) does not need to be preheated before the food can be cooked. Therefore, embodiments of the present invention provide also an energy and time efficient way of cooking food.

It is also possible to achieve precise cooking results in that the food is cooked exactly over the correct cooking time and not too long or too short. As result, vitamins, colour and surface structure of the food can be maintained while the food is still cooked properly.

Finally, since only steam is in the pressure container and no water, the pressure container can extremely fast release the steam pressure inside the pressurized container (e.g. by bringing cold water in the pressure container) and the food steamer can safely used even by children. To further improve the safety, an optional handle or grip may be provided at the pressure container so that the user can hold it without risking to burn the fingers. The optional handle or grip may also be detachable from the pressure container and may be configured to fit to different pressure containers.

### Brief Description of the Drawings

The present invention will now be described by way of examples only, with reference to the accompanying drawings, in which:
- Fig. 1: depicts a schematic view of an embodiment of the present invention;
- Fig. 2: depicts a detailed embodiment of the present invention;
- Fig. 3: depicts an embodiment with a further isolation of the pressurized container and an additional heater in the pressurized container;
- Fig. 4: depicts an embodiment with a further optional container for spices;
- Fig. 5a, b: depict further embodiments with an optional circle or an optional bypass for cooled water supply;
- Fig. 6: depicts an embodiment with an optional discharge port for condensed water;
- Fig. 7: illustrates the controlling of the steam cooker during a cooking process.

### Detailed Description of the Invention

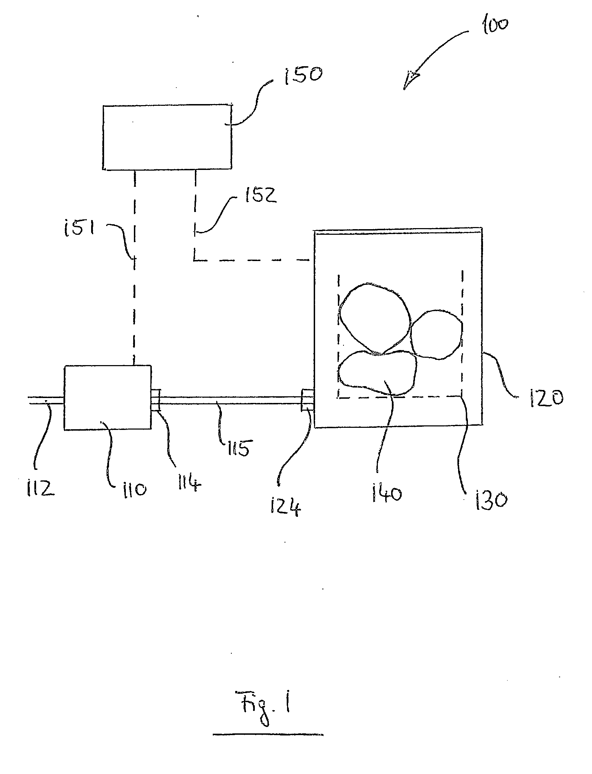

Fig. 1 depicts a pressurized steam cooker 100 according to an embodiment of the present invention, which comprises a heater 110, a pressure container 120 and a control unit 150. The heater 110 comprises a water inlet 112 and a steam outlet 114, wherein the heater is configured to evaporate the water into steam and to provide pressurized steam to the steam outlet 114. The pressure container 120 comprises a steam inlet 124, which is connected to the steam outlet 114 of the heater 110 to obtain the pressurized steam from the heater 110. The pressure container 120 is configured to accommodate a food receptacle 130 for food 140. The control unit 150 is connected via a first control line 151 with the heater 110 and is connected via a second control line 152 with the pressure container 120. The control unit 150 is configured to control the heater 110 such that the pressurized steam is provided to the pressure container 120 to generate at least a minimum temperature and a minimum pressure in the pressure container 120 to cook the food 140 in the food receptacle 130.

In further embodiments the food receptacle 130 can be provided with holes or can be closed (e.g., to cook food such as sauces, deserts, jam, stewed fruit). For example, the food receptacle 130 can be configured as a sieve, thereby providing an effective exposure of the food 140 in the food receptacle 130 to the hot steam. Therefore, the food receptacle 130 may also be provided as a closed container for liquid food (or mash food). The food receptacle 130 may or may not comprise a pedestal or feet so that the food does not lie in condense water (in particular, if no additional heating means is provided in the pressure container which will be explained below). In addition, the food receptacle 130 and/or the pressure container 120 may be suitable to be cleaned in a dish washer. Moreover, food having a high amount of water (e.g. meat and/or fish in sauce, sauces, jam, compotes or milk) may be placed directly in the pressure container 120 without using a food receptacle 130. Therefore, in further embodiments the pressure container 120 does not need to be adapted for accommodating a foot receptacle 130.

In further embodiments the heater 110 and the pressurized container 120 are connected by a tube 115 (e.g. comprising a deformable material as for example rubber). The tube 115 may have a length of at least 5 cm (or between 2 to 20 cm) and may be detachable from the pressure container 120. Thereby, the pressure container 120 can be separated from the other components of the steam cooker 100 so that the pressure container 120 can more easily be cleaned (e.g. in a washing machine).

Therefore, the pressurized steam cooker 100 has a means for directly generating steam from water. However, the steam may not be supplied directly to the pressure container 120, but is instead generated by an external component and provided to pressure container 120, e.g., by the pressure tube. The pressure container 120 may, e.g., comprise a volume of 1 ... 1.5 L (or between 0.5 ... 2 L). If the pressure container 120 is configured to be detachable, different containers may be connected to the heater and the sizes of the connected container may vary over a large range (e.g. from 0.2 L to 5L). Moreover, the pressure container may comprise a low heat capacity so that only a little amount of energy is needed to heat the interior of the pressure container 120. Since no water is supplied to the pressure container 120 the size can be adjusted directly by the food receptacle. In addition, the pressurized steam cooker 100 as shown in Fig. 1 comprises means for releasing the steam from the pressure container 120. For example, the pressurized steam cooker 100 may be configured to pass cold water directly to the pressure container 120, whereby the inside pressure is lowered and the hot steam condenses to water. After this, it is safe to open the container 120. This cooling down operation ensures a safe opening of the container.

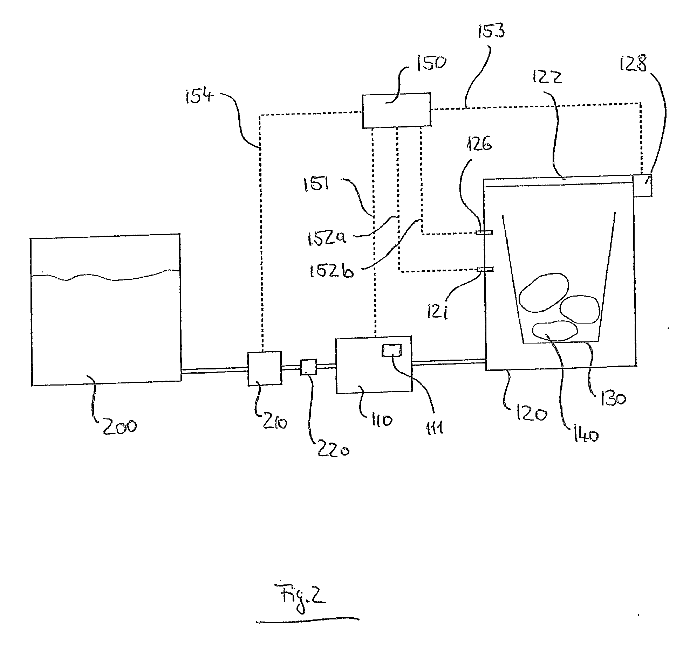

Fig. 2 shows in detail a preferred embodiment of the present invention with the pressure container 120 connected to the heater 110. The heater 110 may comprise a heating block, whose temperature may be determined by a first temperature sensor 111 to ensure that incoming water will evaporate inside the heater in a heating modus. Alternatively, if the temperature of the heating block is below the boiling temperature, incoming water can flow through the heater 110 and is provided to the pressure container 120 (e.g. for cooling in a cooling modus). The pressure container 120 may comprise a second temperature sensor 121 and a pressure sensor 126, both are connected to the control unit 150 by the second control line 152 including a first line 152a connected to the second temperature sensor 121 and a second line 152b connected to the pressure sensor 126. In addition, the heater 110 is controlled by a control unit 150 via the first control line 151, which may also be used for transmitting the determined temperature of the first temperature sensor 111 to the control unit 150.

In addition, an optional water container 200 is connected with a pump 210, which in turn is connected to the heater 110 via a check valve 220 to provide the water flow path from the water container 200 to the heater 110. The pump 210 may be controlled and monitored by the control unit 150 via a fourth control line 154. The check valve 220 is configured to ensure that water flows toward the heater 110, but can not flow back to the pump 210, thereby supporting the heater 110 to increase the pressure of the generated steam to be provided to the pressure container 120. The check valve 220 may ensure that a pressure inside the pressure container 120 is maintained even if the pump 210 in turned off. Finally, the pressure container 120 comprises a lid 122 (or cover) and a lock with a lock sensor 128 to ensure that the pressure container 120 is securely closed when the pressure increases during operation, in particular, when it reaches a threshold pressure (e.g. more than 30 % of the atmospheric pressure or more than 1.5 bar). The lock sensor 128 may also be controlled or monitored by the control unit 150 via a third control line 153.

The steam inlet 124 may be provided at a bottom portion of the container 120. Optionally, the steam inlet 124 can also be provided at middle or upper portion of a side wall of the container 120. The steam inlet 124 may also be arranged in the lid 122. In addition, also the temperature sensor 121 and/or the pressure sensor 126 can be comprised in the lid 122.

The operation of the pressurized steam cooker 100 may, for example, be described as follows. The user fills food 140 in the food receptacle 130, inserts the food receptacle 130 in the pressure container 120, and closes the pressure container 120 with the lid 122 afterwards. After closing the pressure container 120 the steam cooker 100 can be activated. Thereafter the control unit 150 may check via the lock sensor 128 whether the lid 122 is securely closed. Then, the control unit 150 activates the heater 110 and controls the temperature inside the heater 110 with the first temperature sensor 111. For example, the control unit 150 may be configured to heat at first the heater up to an operating temperature Tb (e.g. 110°C) before water is pumped from the water container 200.

Next, the pump 210 is activated by the control unit 150 and water is supplied from the water container 200 to the heater 110. The supplied water evaporates inside the heater 110 so that hot steam is generated. The heating causes an expansion and because the check valve 220 blocks an expansion towards the pump 210 pressurized steam is directed to the pressure container 120. Since the pressure container 120 as well as the food 140 inside the container 120 and the food receptacle 130 are at ambient temperature (e.g. between 5 °C and 40 °C) or lower temperatures (for example, refrigerator temperature of about 7°C or frozen at about -20°C) at the beginning, incoming hot steam condenses at the food 140, the inner walls of the pressure container 120 as well as at the food receptacle 130, thereby heating them.

The process of incoming hot steam is continued until the steam atmosphere in the pressure container 120 is saturated. During this process the increasing temperature is monitored by the second temperature sensor 121. If, e.g., the temperature inside the pressure container 120 reaches an initial temperature T0 (e.g. 90°C), the control unit 150 starts a timer which is configured to monitor the cooking time for the particular food 140 inside the food receptacle 130. If the second temperature sensor 121 detects that the temperature inside the pressure container 120 reaches an upper temperature T2 (e.g. 120°C), the control unit 150 stops the pump 210, thereby interrupting the inflow of further hot steam in the pressure container 120. The check valve 220 ensures that the pressure can not drop (at least not by an outflow of steam).

In the following the control unit 150 further monitors the temperature via the second temperature sensor 121 such that when the temperature inside the pressure container 120 reaches a lower temperature T1 (e.g., 115°C), the pump 210 is again activated to pump further hot vaporized steam in the pressure container 120 until again the upper temperature T2 is reached, at which the pump 210 stops again. This process is repeated until the timer detects that the cooking time is over so that the heater 110 can be deactivated.

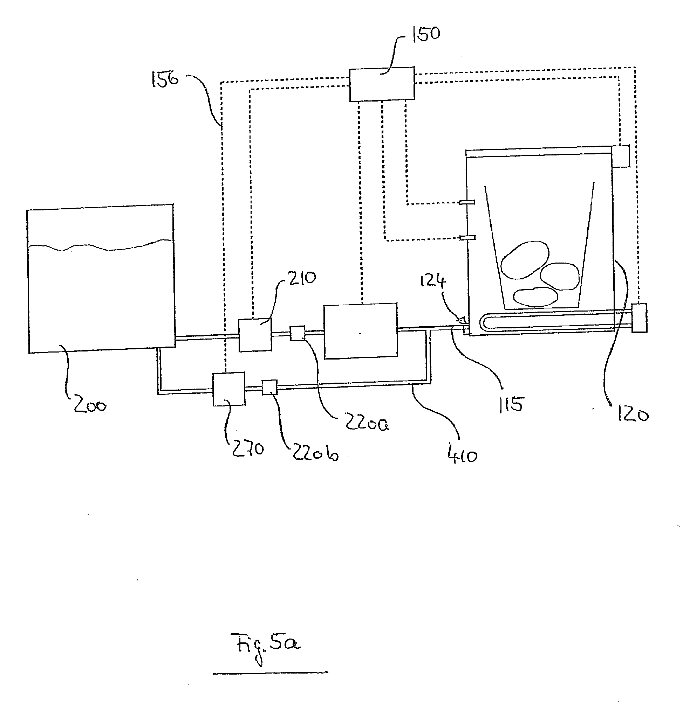

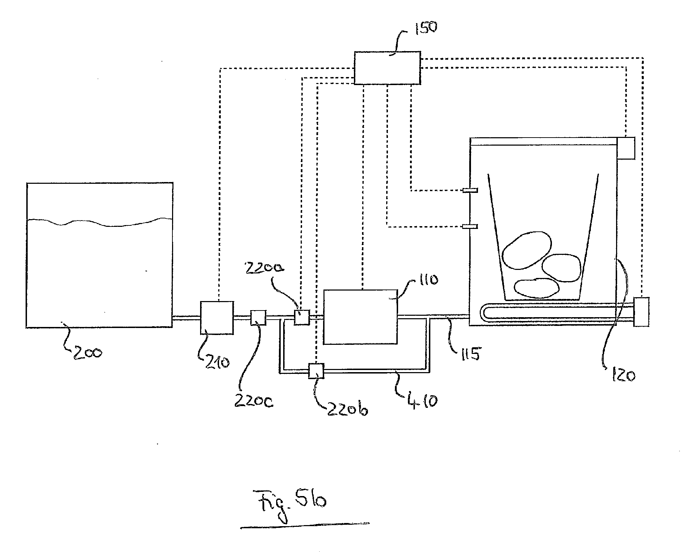

At the end, the pump 210 may, e.g., be activated to pump cold water from the water container 200 in the pressure container 120 through the heater 110 to cool both devices. For this, the control unit 150 may at first wait until the heater 110 has cooled down below the boiling temperature, for example, by using the first temperature sensor 111, so that water flowing through the does not evaporated and flows directly into the pressure container. The cold water has the effect that the steam inside the pressure container 120 will condense, thereby decreasing the pressure. If the pressure inside the pressure container 120 has reached a value where the user can open the lid safely, the lid sensor 128 can unlock the lid 122 such that the user can open the pressure container 120 to take out the cooked food 140. As it will be explained in more detail below, in further embodiments the cold water does not flow through the heater 110, but uses a bypass line (see fig. 5a, b).

In further embodiments the pressure is constantly monitored by the pressure sensor 126 and the detected pressure is used by the control unit 150 for further optimizing the cooking process. The locking mechanism of the lid 122 can be provided electronically or mechanically. The optional sensor 128 can detect a secure closure of the lid 122 and can enable the opening only in case the pressure and/or temperature inside the pressure container 120 has reached safe limits.

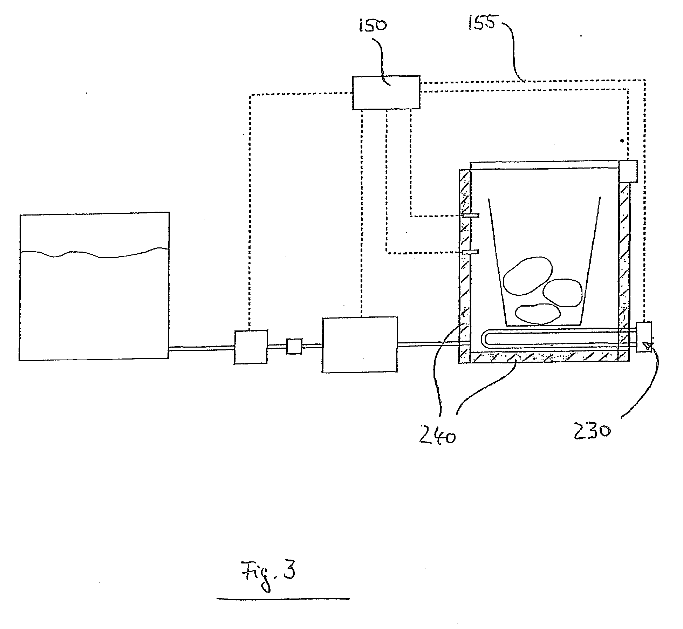

Fig. 3 depicts a further embodiment which has the same components as the embodiment shown in Fig. 2. However, in this embodiment the pressure container 120 comprises an optional isolation 240 and a further means for heating 230, which is also controlled by the control unit 150 via a fifth control line 155. The isolation 240 is adapted to provide a thermal isolation of the interior of the pressure container 120 to suppress heat losses to the environment. The additional heating means 230 is adapted to heat the interior of the pressure container 120 and may, e.g., be used to vaporize any condensed water inside the pressure container 120. This additional heater 230 can therefore ensure that the pressure container does not contain any water, but only steam during the cooking process of the food 140. This is also the preferred operational modus even in embodiments without the additional heating 230. The optional further heating means 230 can also be provided beneath the pressure container 120 (but in good thermal contact to the interior of the container 120). The optional heating means 230 can either be inside the pressure container 120 so that it is subject to the high pressure inside the container 120, or it is arranged outside the pressure container 120 so that it is not subject to the high pressure inside the pressure container 120.

The isolation 240 may be provided as an addition layer on the pressure container 120 or as separate isolating container in which the pressure container 120 is inserted. Alternatively, the pressure container 120 itself may comprise a thermally isolating material which can also withstand the pressure inside the container and suppress a thermal flow so that the condensation of water on the surface of the pressure container 120 is inhibited. Possible materials of the pressure container 120 and/or for the food receptacle 130 are e.g.: stainless steel, heat resistant synthetics (e.g. fibre-reinforced), silicone, glass (e.g. pyrex) or combination thereof. Possible materials for the isolation are: foam material, styropore, etc.

All other components as shown in Fig. 3 are the same as in the embodiment of Fig. 2 and a repeated description is omitted here.

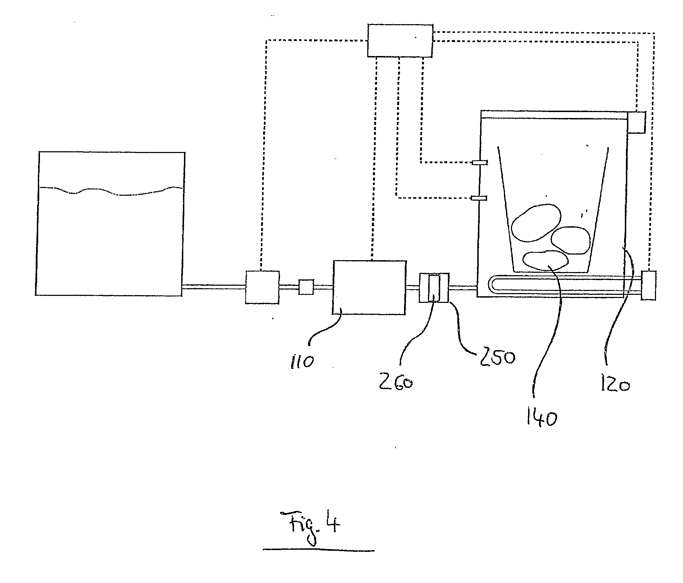

Fig. 4 shows a further embodiment, wherein in addition to the embodiment as shown in Fig. 2 a spice container 250 with a spice receptacle 260 is arranged between the pressure container 120 and the heater 110. Therefore, the hot pressurized steam as provided by the heater 110 to the pressure container 120 will pass the spice container 250 and will pick up the spice aroma from the spice receptacle 260 and provide it to the food 140 in the pressure container 120 together with the pressurized hot steam. In addition, also this embodiment may comprise the additional heating 230 arranged at the bottom of the pressure container 120. In this embodiment, the pressure container 120 is not provided with a separate isolation 240 as in Fig. 3, but it may also be added to this embodiment. The material of the pressure container 120 may, however, also provide sufficient isolation. By using the spice container 250 with the spice receptacle 260 the food can be flavoured even though no liquid water is contained in the pressure container (when it is operated in the optimal modus). In addition, by using the steam for flavoring food the flavor is continuously distributed over the food. The spice receptacle 260 may, for example, be configured to be refilled by the user, or can be configured to be disposable so that the user acquires spice receptacles 260 (e.g. for different spices different containers), in which case the spice receptacles 260 should be interchangeable.

All other components as shown in Fig. 4 are the same as in the embodiment of Fig. 2 and a repeated description is omitted here.

Fig. 5a depicts a further embodiment, wherein, in addition to the features as shown in Fig. 2, a second cold water circle 410 (a bypass line) is provided to connect the water container 200 with the connection (tube 115) between the heater 110 and the pressure container 120. Along this cold water bypass 410, a cold water pump 270 and a further check valve 220b is provided (e.g. to prevent a back flow of the cold water caused by the pressure inside the container 120). The cold water pump 270 is connected to the control unit 150 via a sixth control line 156 and the control unit 150 is further adapted to control the cold water pump 270 such that cold water is pumped from the water container 200, via the further check valve 220b towards the pressure container 120 after the food 140 is cooked. In further embodiments, the pump 210 and the cold water pump 270 are replaced by a single 2-way pump (or more way pump), which is configured to the pump the water either to the heater 110 (via the optional check valve 220a) or directly to the pressure container 120 (via the bypass line 410 and the optional further check valve 220a). This 2-way pump may be controlled by the forth control line 154 and/or sixth control line 156. Optionally, a check valve may be provided between the two-way pump and the water container or between either of the two outlets of the two-way pump and the heater or between the two-way pump and the pressure container.

The cold water circle 410 as depicted in Fig. 5a can also be modified in that it only provides a bypass for the heater 110, which is shown in Fig. 5b. In this embodiment, between the pump 210 and the heater 110 a first check valve 220a and a third check valve 220c are provided and the bypass line 410 is connected with the tube connecting the first and third check valve 220a, c. In addition, along the bypass line 410 a second check valve 220b is arranged. Alternatively, the first check valve 220a and the second check valve 220b can be combined into a single two-way valve to direct the fluid flow either to the heater 110 or directly to the pressure container 120 by bypassing the heater 110 via the second cold water circle 410. The first, second and third check valves 220a, b, c are each controlled by the controller 150 to open or close the check valves separately. The check valves 220 are configured to prevent a water flow back to the water container 200 and provide therefore only a one-way fluid path for the water. By using a two-way check valve, the construction can be simplified and, nevertheless, provides the functionality that either way (either through the heater 110 or by using the bypass line 410, or combining both ways) can be controlled independently by the control unit 150. The check valves 220 may be replaced by a solenoid valve (i.e. a valve comprising a control terminal for controlling the valve as e.g. magnet valves) to provide a fast and reliable switching functionality.

All remaining features as shown in Fig. 5b are the same as the one shown in Fig. 5a so that a repeated description can be omitted here. An advantage of the embodiment as shown in Fig. 5b over the embodiment as shown in Fig. 5a is that the additional pump 270 is not needed so that a single pump 210 can provide the water pressure when pumping the water towards the heater 110 and/or to the pressure container 120, and, in addition, that only one connection to the water container 200 is needed.

In further embodiments, the pump 210 and the cold water pump 270 are replaced by a single (e.g. 1-way) pump which is arranged between the water container 200 and the check valve 220a. The bypass line 410 with the further check valve 220b is not connected with the water container 200, but is instead connected with the line between the single pump and the check valve 220a. In this embodiment, the check valve 220a and the further check valve 220b are further configured to be controlled by the control unit 150 to open or close the respective line. For example, if the check valve 220a is controlled to be open and the further check valve 220b is controlled to be closed, water is pumped from the water container 200 towards the heater 110. In the opposite case, if the check valve 220a is controlled to be closed and the further check valve 220b is controlled to be open, water is pumped from the water container 200 via the bypass line 410 directly to the pressure container 120, thereby bypassing the heater 110.

Therefore, in this embodiment cold water is not pumped from the water container 200 to the pressure container 120 via the heater 110, but along the bypass 410. This has the advantage that the heater 110 is not exposed to cold water. Therefore, damages at the heater 110 caused by the rapid cooling can be prevented and the heater 110 can instead slowly cool down. In addition, no waiting time is needed until the heater has cooled down below the boiling temperature. Also cold water can be pumped in the pressure container 120, because the steam condenses very quickly and thus only a little amount of water is needed. On the other hand, the steam atmosphere inside the pressure container 120 is still rapidly cooled down by the cold water flowing from the water container 200 in the pressure container 120 via the bypass 410. This embodiment comprises therefore two pumps, a cold water pump 270 and a normal water pump 210, which are used to pump the water from the water container 200 to the heater 110 and thereby to pump also the steam in the pressure container 120. Optionally, both the hot steam from the heater and the cold water from the bypass can be provided only during different operation modes (heating modus and cooling modus) to the steam inlet 124. In further embodiments, a combined steam/water inlet is therefore provided at the pressure container 120.

In further embodiments the bypass 410 can also be connected directly to the pressure container 120 via a separate inlet.

All other components as shown in Figs. 5a, b are the same as in the embodiment of Figs. 2, 4 and a repeated description is omitted here.

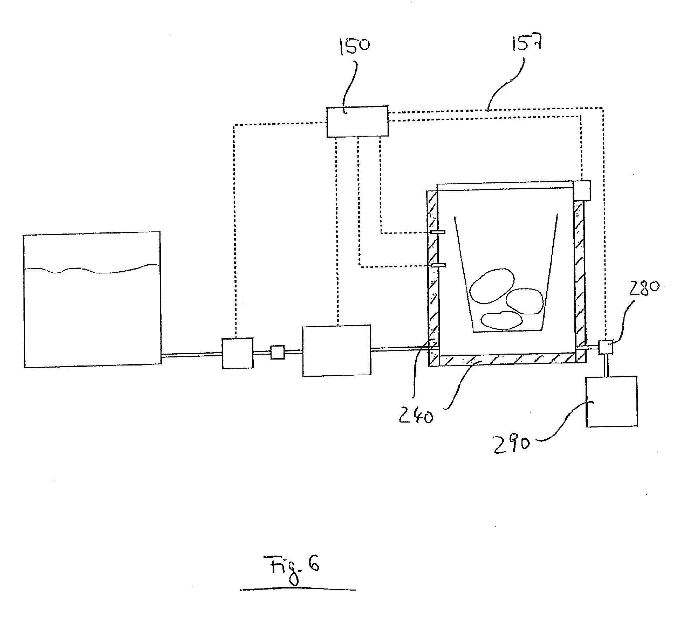

Fig. 6 shows a further embodiment, wherein a further discharge valve 280 is provided at the pressure container 120. In addition, an optional condensed water container 290 is provided to collect condensed water from inside of the pressure container 120. For example, after bringing the cold water in the pressure container 120 to cool down the interior the hot steam condenses and condensed water is generated, which together with cold water has to be discharged, for which the discharge valve 280 and the condensed water container 290 may be used. The discharge valve 280 may also be controlled by the control unit 150 via a seventh control line 157.

The pressurized steam cooker with this discharge valve 280 and the condensed water container 290 provides a high safety so that there is no danger to be exposed to boiling water and/or hot steam. Therefore, even children can use the steam cooker.

The embodiment as shown in Fig. 6 also comprises the isolation 240 as described in fig. 3. In addition, all other components as shown in Fig. 6 are the same as in the embodiment of Figs. 2, 4 and a repeated description is omitted here.

Further embodiments relate to a system of pressure cookers with different chambers to cook in parallel different dishes. This system may be formed by a plurality of steam cookers as shown in Fig. 1. In such a system a plurality of pressure containers can be combined, wherein each comprises corresponding sensors to detect the respective temperature and pressure inside the different pressure containers. In addition, the plurality of pressure containers can be controlled by a common control unit, which controls, e.g., different pumps to pump water from a common water container to the different pressure containers. Optionally, the plurality of pumps can be replaced by only one pump which may be a multi-way pump, or, alternatively, may comprise one outlet which is connected to different lines with corresponding valves which are configured to be controlled by the common control unit to open and close the corresponding line.

In further embodiments the food receptacle 130 comprises a base plate, which may comprise a coating (e.g. made of polytetrafluorethylen (PTFE) or similar materials) so that the food receptacle 130 can be placed directly on the additional heating 230. The additional heating 230 may then also be used to roast or grill the food, before the steam is introduced (e.g. onions for carrots). Furthermore, the additional heating 230 boils the dish and thus generates pressure - without introducing additional steam. The aforesaid advantages apply in the same way.

The different features described with the different figures are not to be understood as alternatives, but can also be combined differently.

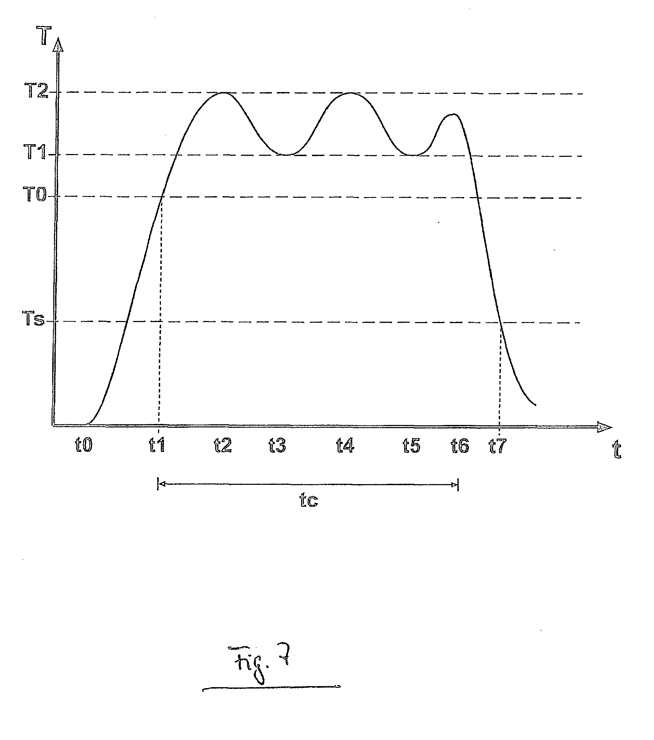

Fig. 7 depicts a possible controlling of the steam cooker during a cooking process. A temperature profile as a function of the time t is shown illustrating the different phases of an exemplary cooking process.

At an initial time t0 the pressurized steam cooker 100 is turned on so that the heater 110 generates hot steam and provides the hot steam to the pressure container 120. As consequence, the temperature in the container 120 increases constantly until at time t1 the temperature inside the pressure container 120 reaches a start temperature T0. At this start time t1, a timer may be started to measure the cooking time. The timer may be arranged in the control unit 150 and may be adjusted manually depending on the food to be cooked.

The heater 110 continues to produce hot pressurized steam and provides the hot steam to the pressure container 120 so that the temperature inside the pressure container 120 increases further until an upper temperature T2 is reached at time t2. The upper temperature T2 defines the maximum temperature which shall be used to cook the (particular) food 140 and which may also be manually adjusted by the user.

At this second time t2 the control unit 150 turns off the heater 110 and/or the water pump 210 so that the temperature inside the pressurized container 120 constantly decreases until the temperature at a third time t3 reaches a lower temperature T1. Also this lower temperature T1 can be manually adjusted by the user and defines the minimum temperature which shall at least be provided to cook the food. Therefore, the control unit 150 is configured turn on the heater 110 and/or the water pump 210 at the third time t3 so that hot steam is again provided to the pressure container 120. The temperature will again increase inside the pressure container 120. When the temperature inside the pressure container 120 reaches again the upper temperature T2 at a fourth time t4 the control unit 150 will again turn off the heater 110 and/or the water pump 210 so that the temperature inside the pressure container 120 decreases. This process continues so that, for example, at a fifth time t5 the heater and/or the pump are started again.

In further embodiments, the heater 110 sustains automatically the temperature of, for example, 110 °C as operating temperature and by turning on/off the water pump 210 steam is either generated or not. If the pump 210 is turned off, and hence no steam is generated, there is no heat transmission to the pressure container 120, which will thus slowly cool down.

When the timer detects that the cooking time is over (e.g. at the sixth time t6) the control unit 150 may turn off completely the heater 110 and may either control the pump 210 or the additional pump 270 to provide cold water from the water container 200 to the pressure container 120, thereby cooling rapidly the inside of the pressure container 120. The hot steam inside the pressure container will condense at the cold water provided to the pressure container 120. The pressure container 120 can be opened when the pressure inside the pressure container 120 has dropped below a safety pressure Ps.

The values of the parameters may be selected as follows. The start temperature: T0 = 90 °C (or between 80 and 95°C), the upper temperatures: T2 = 120 °C (or between 110...140°C), the lower temperature: T1 = 115°C (or between 105... 125°C). The safety pressure: Ps = 1 bar (or 1...1.5 bar).

In further embodiments the timer can be manually adjusted and may depend on the different food to be cooked in the pressure container 120.

In further embodiments, the control unit 150 can be configured to provide a particular keepwarm function, wherein a reduced steam power is used to heat the pressure container 120. For example, this function can be set-up in that the upper and lower temperatures T2, T1 are lowered accordingly (e.g. in that the upper temperature T2 = 100°C and the lower temperature T1 = 60°C).

In further embodiments the control unit 150 can be configured to provide the steam from the heater 110 to the pressure container 120 not as pressurized steam (e.g. by providing it at ambient pressure). For example, an additional valve (or the discharge valve 280) can be used to keep the pressure inside the pressure container at a low value (e.g. atmospheric pressure or only 10% or 30% above). This value may be manually selected. This can, e.g., be a desired function in case the cooking result is not yet achieved and only a short period of time is needed to finalize the cooking process. Moreover, the control unit 150 may comprise further control elements to provide particular timing requirements for different food.

In further embodiments the pressurized steam cooker provides a particular function for decalcification. For this the temperature and pressures may be adjusted (the temperature is, e.g., below the boiling temperature) such that a decalcification liquid in the water container 200 can efficiently decalcify the heater 110 and the pressure container 120. In further embodiments, the steam cooker may be configured to provide also a cleaning function, wherein the pressure container 120 is, for example, filled with water, which is then manually discharged via discharge valve 280 (e.g. by pressing a button on the control unit).

In further embodiments the control unit 150 can optionally be configured to provide an acoustic and/or visual signal when the food 140 is cooked. Furthermore, the pressure container 120 may optionally be configured to enable extension units to be fixed to the pressure container 120 so that the volume is enlarged and larger portions of food can be cooked. For example, threads can be provided at the pressure container 120 to provide a detachable connection to an extension unit.

Further advantages of embodiments of the present invention will now be summarized in connection with the various possibilities to cook different dishes.

Embodiments of the present invention may be usable to prepare food, which is dried and have a water content of about 13 % (or between 5...20%) (e.g. noodles). Since noodles need water to be cooked it is not possible to simply cook them in steam. They need a certain amount of liquid water for cooking. For example, the noodles can be placed in the food receptacle 130 (as e.g., given by a sieve). As a next step, liquid water of about 100°C (or cold water, which is heated with the additional heater 230 or which is partly heated with the heater 110 and subsequently further heated with the further heater 230) is introduced in the pressure container 120 (i.e. no steam) until the noodles are covered by the water. As a next step, the noodles together with the water are heated up to a temperature of about 120°C (e.g. by introducing hot steam or by using the further heater 230). The control unit 150 controls the cooking process as for any other dish in that the pressure and temperature is monitored during the cooking process. As in the embodiment described before, the control unit 150 is configured to keep the temperature in the desired range, i.e. it turns on the heater 110 and the water pump 210 so that hot steam is again provided to the pressure container 120. The temperature will increase inside the pressure container 120. When the temperature inside the pressure container 120 reaches again the upper temperature T2 (e.g. 120 °C) the control unit 150 will turn off the heater 110 and/or the water pump 210 so that the temperature inside the pressure container 120 decreases up to the lower temperature (e.g. 115°C). Optionally, the control unit 150 may be configured to control the further heater 230 to increase the temperature in the pressure container 120. Therefore, the control unit 150 may either use both heaters (the heater 110 and the further heater 230) or may use only one of both for the heating. This process continues until the cooking time has elapsed, after which cold water is introduced. As a result, the pressure inside the pressure container 120 drops rapidly and the water can be discharged over the discharge valve 280 into the condensed water container 290. Because the steam pressure falls rapidly, the lid can be opened and the noodles can be taken out of the pressure container. It is also possible to use the additional heater 230 to provide an optional heat keeping function to keep the temperature of the exemplary noodles.

It is also possible to open the discharge valve 280 manually to discharge the water into the condensed water container 290.

In further embodiment, the cooking process is carried out without additional pressure, i.e. the pressure inside the pressure container 120 is atmospheric pressure or slightly above (e.g. only 5 % or 10% above atmospheric pressure). This can be, e.g., advantageous for noodles. This can be achieved by an additional valve in the pressure container which keeps the pressure inside at a controlled level (e.g. by the control unit 150). Even without internal pressure, the cooking device is advantageous in that it does not boil over and in that the water can be discharged automatically or manually after the cooking time has elapsed so that it is easy to handle and moreover secure even for children. There is no danger that children are exposed to hot steam while straining the noodles, because there is no need to discharge boiling water from noodles as it is the case in conventional systems.

For dishes which do not need water or steam (as for example sauces, meat and/or fish in sauce, jam or compote) these dishes can be introduced directly into the pressure container 120 without using the food receptacle 130. Since these dishes do not need any water or steam, the additional heating 230 in the bottom portion of the pressure container 120 can be used to bring these dishes at a cooking temperature and/or to generate the desired pressure inside the pressure container 120. For example, the control unit 150 is configured to provide a timer functionality for this cooking and, in addition, to measure the time needed for cooking these dishes so that after the time has elapsed the steam is automatically discharged (as for example for jams), or cold water is introduced in the pressure container to terminate the cooking process (as, for example, for dishes like sauces). Therefore, also here a secure automatic controlling is possible so that even children can use the system. It is simple, clean and fast and is very energy efficient, because the system is isolated and comprises an optimal controlling. It is even suitable for small portions (e.g. with a volume of less than 2 1). Therefore, also liquid dishes (e.g. containing sauces, fish and/or meat with sauce, vegetables, soups or desserts, milk, jam, stewed fruits) can be prepared, when a food receptacle 130 without openings or no food receptacle is used.

Advantages of present invention over conventional cooking devices can be summarized as follows.

The cooking time is significantly shorter, for example, only one half or 2/3 of the conventional cooking time and therefore dishes are prepared in a very short time.

When compared to the conventional pressure cooker, the present invention provides the advantage that it is very secure. A constant control of the pressure, for example by controlling the coupling to the heater, prevents the danger that the cooking device can explode. At conventional pressure cookers it is needed to survey the cooking process and to manually control the cooking process. For example, when the pressure exceeds a predetermined threshold the heater has to be lowered in order to cool down the conventional steam cooker. However, it is difficult to control a conventional pressure cooker manually to keep the heater always at the correct temperature so that neither the pressure inside the steam cooker drops below a threshold, nor that the pressure exceeds an upper threshold. If the pressure exceeds an upper pressure, conventional pressure cookers open a security valve so that dependent on the dish the discharged steam contaminates the kitchen. In contrast to these conventional pressure cookers the pressurized steam cooker as defined in this invention is optimally controlled in that the pressure inside the pressure container always has the correct pressure so that there is no need that the overpressure valve is activated (because the pressure is controlled by using the heater). Since there is no danger of explosion, the steam cooker can be operated without the need of a permanent monitoring. Hence, the pressurized steam cooker is, in particular, also suitable to be used by children. Another advantage is that the discharging of the pressurized steam is significantly faster and leaves no dirty remains, because water is discharged at the end and no steam.

A further advantage of the pressurized steam cooker is that not only the pressure increase inside the pressure container is fast, but also the lowering of the pressure is very quick due to the condensing steam inside. In addition, because the pressure is increased and decreased very fast, also the result of the cooking is improved, because a timing of the cooking can be assured very correctly. Moreover, the volume of the portions can vary over a broad range and thus it is also possible to cook only small volumes (for examples about 2 1 volumes). Since there is no need to boil water or to heat a bottom portion of a pot, also the energy can be used very efficiently so that the pressurized steam cooker according to the present invention saves energy. There is also no burner needed, because the heat is provided by the heater which evaporates the water directly into steam.

Finally, the whole cooking process can be automatically controlled so that even the discharging of water can be automatically done (by the control unit).

In summary, vegetables can be cooked significantly faster, more easily and gently with the pressurized steam cooker according to the present invention.

It is, moreover, possible to cook noodles, rice and other dishes which need water for cooking. Even complete dishes including sauces can be prepared by using the pressurized steam cooker.

The embodiments described above and the accompanying drawing merely serve to illustrate the subject matter of the present invention and the beneficial effects associated therewith, and should not be understood to imply any limitation. The features of the invention, which are disclosed in the description, claims and drawings, may be relevant to the realization of the invention, both individually and in any combination.

## Claims

1. A pressurized steam cooker (100) comprising:
a heater (110) with a water inlet (112) and a steam outlet (114), said heater (110) being configured to evaporate said water into said steam and to provide said steam to said steam outlet (114) with a steam pressure of at least a minimum pressure;
a pressure container (120) for accommodating a food receptacle (130) for food (140), said pressure container (120) comprising a steam inlet (124) connected to said steam outlet (114) of said heater (110) and a temperature sensor (121) configured to determine a temperature (T) of said steam in said pressure container (120), wherein said pressure container (120) is separated from said heater (110) and is closable to expose said food (140) to said steam under said steam pressure; and
a control unit (150) being configured to obtain said temperature (T) from said temperatures sensor (121) and to control said heater (110) such that said temperature (T) comprises at least a minimum temperature (T1) to cook said food (140) in said food receptacle (130), **characterized in that** the cooker further comprises a spice container (260) for accommodating spices, the spice container (260) being arranged between said heater (110) and said pressure container (120) such that said steam from said heater (110) passes said spices before entering said pressure container (120).

2. The pressurized steam cooker (100) according to claim 1, wherein the control unit (150) is configured to lower said steam pressure inside said pressure container (120) by introducing liquid water in said pressure container (120).

3. The pressurized steam cooker (100) according to claim 1 or claim 2, further comprising a pressure tube (115) of deformable material connecting said steam outlet (114) and said steam inlet (124).

4. The pressurized steam cooker (100) according to one of the preceding claims, wherein said heater (110) comprises a heating block and a further temperature sensor (111) for determining a temperature of the said heating block, said pressurized steam cooker (100) further comprising a pump (210) configured to provide said water to said heating block in said heater (110) with a pressure based on said steam pressure, wherein said control unit (150) is configured to control said heater (110) such that said heating block comprises at least a boiling temperature of water under said steam pressure.

5. The pressurized steam cooker (100) according to claim 4, further comprising a detachable water container (200) configured to provide said water to said pump (210).

6. The pressurized steam cooker (100) according to claim 4 or claim 5, further comprising a check valve (220) provided between said pump (210) and said heater (110) to block a water flow from said heater (110) to said pump (210).

7. The pressurized steam cooker (100) according to one of the preceding claims, wherein said pressure container (120) comprises a pressure sensor (126) for determining said steam pressure inside said pressure container (120).

8. The pressurized steam cooker (100) according to one of the preceding claims, wherein said pressure container (120) comprises a thermal isolation (240) at a side wall and/or at a bottom portion of said pressure container (120), and wherein said steam inlet (124) is provided at said side wall spaced from said bottom portion.

9. The pressurized steam cooker (100) according to one of the preceding claims, further comprising:
a lid (122) with an electronical or mechanical locking mechanism for closing said pressure container (120), said lid (122) being configured to provide a sealing up to a maximum pressure inside said pressure container (120); and
a lid sensor (128) for blocking an opening operation of said lid (122) until said steam pressure has dropped at least up to a lower threshold value.

10. The pressurized steam cooker (100) according to one of the preceding claims, further comprising an additional heating (230) arranged at said pressure container (120), said additional heating (230) being configured to evaporate condensed water inside said pressure container (120).

11. The pressurized steam cooker (100) according to one of the claims 4 to 10, further comprising a bypass (410) being adapted to provide a further flow path for water from said water container (200) to said pressure container (120), wherein the control unit (150) is configured to direct water along said bypass (410) to said pressure container (120) to lower said steam pressure by inflowing water, wherein along said bypass (410) a further pump (270) and a further check valve (220b) are arranged to provide a directed flow of water from the water container (200) to the pressure container (120).

12. The pressurized steam cooker (100) according to one of the preceding claims wherein said control unit (150) is configured to provide a timer functionality in that after a predetermined cooking time (tc) has elapsed said heater (110) is controlled to lower said temperature (T) below said minimal temperature (T1) and/or to lower said steam pressure in said pressure container (120).

13. The pressurized steam cooker (100) according to one of the preceding claims, further comprising a condensed water container (290), wherein said pressure container (120) comprises a discharge valve (280) being in fluid connection to said condensed water container (290) and being configured to discharge condensed water from inside said pressure container (120) into said condensed water container (290).

14. The pressurized steam cooker (100) according to one of the preceding claims, wherein said control unit (150) is also configured to control at least one device selected from a group consisting of: said lid sensor (128), said pump (210), said additional heating (230), said additional pump (270), and said discharge valve (280), wherein said controlling is based on at least one parameter selected from a further group comprising: the temperature (T) and/or said steam pressure in the pressure container (120).

## Patentansprüche

1. Druckdampfgarer (100), umfassend:
eine Heizvorrichtung (110) mit einem Wassereinlass (112) und einem Dampfauslass (114), wobei die Heizvorrichtung konfiguriert ist, um das Wasser zu verdampfen und um Dampf am Dampfauslass (114) mit zumindest einem Minimaldampfdruck bereitzustellen;
einen Druckbehälter (120) zum Aufnehmen eines Nahrungsmittelbehälters (130) für Nahrungsmittel (140), wobei der Druckbehälter (120) einen Dampfeinlass (124), welcher mit dem Dampfauslass (114) der Heizvorrichtung (110) verbunden ist, und einen Temperatursensor (121) umfasst, welcher konfiguriert ist, um eine Dampftemperatur (T) im Druckbehälter (120) zu bestimmen, wobei der Druckbehälter (120) von der Heizvorrichtung (110) getrennt und verschließbar ist, um das Nahrungsmittel (140) dem Dampf mit dem Dampfdruck auszusetzen; und
eine Steuereinheit (150), welche konfiguriert ist, um die Temperatur (T) vom Temperatursensor (121) zu erhalten und um die Heizvorrichtung (110) so zu steuern, dass die Temperatur (T) wenigstens eine Minimaltemperatur (T1) erreicht, um das Nahrungsmittel (140) im Nahrungsmittelbehälter (130) zu kochen,
**dadurch gekennzeichnet, dass** der Garer des Weiteren einen Gewürzbehälter (260) zum Aufnehmen von Gewürzen umfasst, wobei der Gewürzbehälter (260) zwischen der Heizvorrichtung (110) und dem Druckbehälter (120) so angeordnet ist, dass der Dampf von der Heizvorrichtung (110) vor dem Eintreten in den Druckbehälter (120) durch die Gewürze hindurchströmt.

2. Druckdampfgarer (100) nach Anspruch 1, wobei die Steuereinheit(150) konfiguriert ist, um den Dampfdruck im Druckbehälter (120) durch Einleiten von Wasser in flüssigem Zustand in den Druckbehälter (120) zu senken.

3. Druckdampfgarer (100) nach Anspruch 1 oder Anspruch 2, des Weiteren umfassend ein Druckrohr (115) aus verformbarem Material, welches den Dampfauslass (114) und den Dampfeinlass (124) verbindet.

4. Druckdampfgarer (100) nach einem beliebigen der vorangehenden Ansprüche, wobei die Heizvorrichtung (110) einen Heizblock und einen weiteren Temperatursensor (111) zum Bestimmen einer Temperatur des Heizblocks umfasst, wobei der Druckdampfgarer (100) des Weiteren eine Pumpe (210) umfasst, welche konfiguriert ist, um das Wasser dem Heizblock in der Heizvorrichtung (110) mit einem Druck auf der Grundlage des Dampfdrucks zuzuführen, wobei die Steuereinheit (150) konfiguriert ist, um die Heizvorrichtung (110) so zu steuern, dass der Heizblock wenigstens eine Siedetemperatur des Wasser unter dem Dampfdruck aufweist.

5. Druckdampfgarer (100) nach Anspruch 4, des Weiteren umfassend einen abnehmbaren Wasserbehälter (200), welcher konfiguriert ist, um der Pumpe (210) das Wasser bereitzustellen.

6. Druckdampfgarer (100) nach Anspruch 4 oder Anspruch 5, des Weiteren umfassend ein Rückschlagventil (220), welches zwischen der Pumpe (210) und der Heizvorrichtung (110) vorgesehen ist, um einen Wasserfluss von der Heizvorrichtung (110) zur Pumpe (210) zu blockieren.

7. Druckdampfgarer (100) nach einem beliebigen der vorangehenden Ansprüche, wobei der Druckbehälter (120) einen Drucksensor (126) zum Bestimmen des Dampfdrucks im Druckbehälter (120) umfasst.

8. Druckdampfgarer (100) nach einem beliebigen der vorangehenden Ansprüche, wobei der Druckbehälter (120) eine thermische Isolierung (240) auf einer Seitenwand und/oder auf einem Bodenabschnitt des Druckbehälters (120) umfasst und wobei der Dampfeinlass (124) auf der Seitenwand beabstandet zum Bodenabschnitt vorgesehen ist.

9. Druckdampfgarer (100) nach einem beliebigen der vorangehenden Ansprüche, des Weiteren umfassend:
einen Deckel (122) mit einem elektronischen oder mechanischen Verriegelungsmechanismus zum Verschließen des Druckbehälters (120), wobei der Deckel (122) konfiguriert ist, um eine Abdichtung bis zu einem Maximaldruck innerhalb des Druckbehälters (120) bereitzustellen; und
einen Deckelsensor (128) zum Blockieren eines Öffnungsvorgangs des Deckels (122), bis der Dampfdruck wenigstens bis zu einem unteren Schwellenwert gesunken ist.

10. Druckdampfgarer (100) nach einem beliebigen der vorangehenden Ansprüche, des Weiteren umfassend eine Zusatzheizung (230), welche am Druckbehälter (120) angeordnet ist, wobei die Zusatzheizung (230) konfiguriert ist, um kondensiertes Wasser im Druckbehälter (120) zu verdampfen.

11. Druckdampfgarer (100) nach einem beliebigen der Ansprüche 4 bis 10, des Weiteren umfassend eine Umgehung (410), welche ausgelegt ist, um einen weiteren Flusspfad für Wasser vom Wasserbehälter (200) zum Druckbehälter (120) bereitzustellen, wobei die Steuereinheit (150) konfiguriert ist, um Wasser entlang der Umgehung (410) zum Druckbehälter (120) zu leiten, um den Dampfdruck durch einfließendes Wasser zu senken, wobei entlang der Umgehung (410) eine weitere Pumpe (270) und ein weiteres Rückschlagventil (220b) angeordnet sind, um einen gerichteten Wasserfluss vom Wasserbehälter (200) zum Druckbehälter (120) bereitzustellen.

12. Druckdampfgarer (100) nach einem beliebigen der vorangehenden Ansprüche, wobei die Steuereinheit (150) konfiguriert ist, um eine Zeitnehmerfunktionalität dadurch bereitzustellen, dass, nachdem eine vorbestimmten Kochzeit (tc) verstrichen ist, die Heizvorrichtung (110) gesteuert wird, um die Temperatur (T) unter die Minimaltemperatur (T1) zu senken und/oder den Dampfdruck im Druckbehälter (120) abzusenken.

13. Druckdampfgarer (100) nach einem beliebigen der vorangehenden Ansprüche, des Weiteren umfassend einen Kondensatwasserbehälter (290), wobei der Druckbehälter (120) ein Ausstoßventil (280) umfasst, welches sich in Fluidverbindung mit dem Kondensatwasserbehälter (290) befindet und konfiguriert ist, um kondensiertes Wasser aus dem Inneren des Druckbehälters (120) in den Kondensatwasserbehälter (290) auszustoßen.

14. Druckdampfgarer (100) nach einem beliebigen der vorangehenden Ansprüche, wobei die Steuereinheit (150) ebenfalls konfiguriert ist, um wenigstens eine Vorrichtung zu steuern, welche aus einer Gruppe ausgewählt ist, die umfasst: den Deckelsensor (128), die Pumpe (210), die Zusatzheizung (230), die zusätzliche Pumpe (270) und das Ausstoßventil (280), wobei das Steuern auf wenigstens einem Parameter basiert, welcher aus einer weiteren Gruppe ausgewählt ist, die umfasst: die Temperatur (T) und/oder den Dampfdruck im Druckbehälter (120).

## Revendications

1. Cuiseur à vapeur pressurisé (100) comprenant :
un dispositif de chauffage (110) avec une entrée d'eau (112) et une sortie de vapeur (114), ledit dispositif de chauffage (110) étant configuré pour laisser évaporer ladite eau en dite vapeur et pour amener ladite vapeur à ladite sortie de vapeur (114) avec une pression de vapeur d'au moins une pression minimum ;
un récipient de pression (120) pour loger un réceptacle alimentaire (130) pour les aliments (140), ledit récipient de pression (120) comprend une entrée de vapeur (124) raccordée à ladite sortie de vapeur (114) dudit dispositif de chauffage (110) et un capteur de température (121) configuré pour déterminer une température (T) de ladite vapeur dans ledit récipient de pression (120), dans lequel ledit récipient de pression (120) est séparé dudit dispositif de chauffage (110) et peut être fermé pour exposer lesdits aliments (140) à ladite vapeur sous ladite pression de vapeur ; et
une unité de commande (150) étant configurée pour obtenir ladite température (T) dudit capteur de température (121) et pour commander ledit dispositif de chauffage (110) de sorte que ladite température (T) comprend au moins une température minimum (T1) pour faire cuire lesdits aliments (140) dans ledit réceptacle alimentaire (130), **caractérisé en ce que** le cuiseur comprend en outre un récipient d'épices (260) pour loger des épices, le récipient d'épices (260) étant agencé entre ledit dispositif de chauffage (110) et ledit récipient de pression (120) de sorte que ladite vapeur provenant dudit dispositif de chauffage (110) passe sur lesdites épices avant d'entrer dans ledit récipient de pression (120).

2. Cuiseur à vapeur pressurisé (100) selon la revendication 1, dans lequel l'unité de commande (150) est configurée pour abaisser ladite pression de vapeur à l'intérieur dudit récipient de pression (120) en introduisant de l'eau liquide dans ledit récipient de pression (120).

3. Cuiseur à vapeur pressurisé (100) selon la revendication 1 ou la revendication 2, comprenant en outre un tube de pression (115) réalisé avec un matériau déformable raccordant ladite sortie de pression (114) et ladite entrée de pression (124).

4. Cuiseur à vapeur pressurisé (100) selon l'une des revendications précédentes, dans lequel ledit dispositif de chauffage (110) comprend un bloc de chauffage et un autre capteur de température (111) pour déterminer une température dudit bloc de chauffage, ledit cuiseur à vapeur pressurisé (100) comprenant en outre une pompe (210) configurée pour amener ladite eau audit bloc de chauffage dans ledit dispositif de chauffage (110) avec une pression basée sur ladite pression de vapeur, dans lequel ladite unité de commande (150) est configurée pour commander ledit dispositif de chauffage (110) de sorte que ledit bloc de chauffage comprend au moins une température d'ébullition de l'eau sous ladite pression de vapeur.

5. Cuiseur à vapeur pressurisé (100) selon la revendication 4, comprenant en outre un récipient d'eau (200) détachable configuré pour amener ladite eau à ladite pompe (210).

6. Cuiseur à vapeur pressurisé (100) selon la revendication 4 ou la revendication 5, comprenant en outre un clapet de non-retour (220) prévu entre ladite pompe (210) et ledit dispositif de chauffage (110) pour empêcher un écoulement d'eau dudit dispositif de chauffage (110) à ladite pompe (210).

7. Cuiseur à vapeur pressurisé (100) selon l'une des revendications précédentes, dans lequel ledit récipient de pression (120) comprend un capteur de pression (126) pour déterminer ladite pression de vapeur à l'intérieur dudit récipient de pression (120).

8. Cuiseur à vapeur pressurisé (100) selon l'une quelconque des revendications précédentes, dans lequel ledit récipient de pression (120) comprend une isolation thermique (240) au niveau d'une paroi latérale et/ou au niveau d'une partie de fond dudit récipient de pression (120), et dans lequel ladite entrée de vapeur (124) est prévue au niveau de ladite paroi latérale espacée de ladite partie de fond.

9. Cuiseur à vapeur pressurisé (100) selon l'une des revendications précédentes, comprenant en outre :
un couvercle (122) avec un mécanisme de verrouillage électronique ou mécanique pour fermer ledit récipient de pression (120), ledit couvercle (122) étant configuré pour fournir une étanchéité jusqu'à une pression maximum à l'intérieur dudit récipient de pression (120) ; et
un capteur de couvercle (128) pour empêcher une opération d'ouverture dudit couvercle (122) jusqu'à ce que ladite pression de vapeur ait chuté au moins jusqu'à une valeur de seuil inférieure.

10. Cuiseur à vapeur pressurisé (100) selon l'une des revendications précédentes, comprenant en outre un dispositif de chauffage supplémentaire (230) agencé au niveau dudit récipient de pression (120), ledit dispositif de chauffage supplémentaire (230) étant configuré pour évaporer l'eau condensée à l'intérieur dudit récipient de pression (120).

11. Cuiseur à vapeur pressurisé (100) selon l'une des revendications 4 à 10, comprenant en outre une dérivation (410) qui est adaptée pour fournir une trajectoire d'écoulement supplémentaire pour l'eau, dudit récipient d'eau (200) audit récipient de pression (120), dans lequel l'unité de commande (150) est configurée pour diriger l'eau le long de ladite dérivation (410) jusqu'audit récipient de pression (120) pour abaisser ladite pression de vapeur par l'eau entrante, dans lequel le long de ladite dérivation (410), une autre pompe (270) et un autre clapet de non-retour (220b) sont agencés pour fournir un écoulement d'eau dirigé du récipient d'eau (200) au récipient de pression (120).

12. Cuiseur à vapeur pressurisé (100) selon l'une des revendications précédentes, dans lequel ladite unité de commande (150) est configurée pour fournir une fonctionnalité de minuterie en ce que, après l'écoulement d'un temps de cuisson (tc) prédéterminé, ledit dispositif de chauffage (110) est commandé pour abaisser ladite température (T) sous ladite température minimum (T1) et/ou pour abaisser ladite pression de vapeur dans ledit récipient de pression (120).

13. Cuiseur à vapeur pressurisé (100) selon l'une des revendications précédentes, comprenant en outre un récipient d'eau condensée (290), dans lequel ledit récipient de pression (120) comprend une valve de décharge (280) qui est en raccordement de fluide avec ledit récipient d'eau condensée (290) et qui est configurée pour décharger l'eau condensée de l'intérieur dudit récipient de pression (120) dans ledit récipient d'eau condensée (290).

14. Cuiseur à vapeur pressurisé (100) selon l'une des revendications précédentes, dans lequel ladite unité de commande (150) est également configurée pour commander au moins un dispositif choisi dans le groupe comprenant : ledit capteur de couvercle (128), ladite pompe (210), ledit dispositif de chauffage supplémentaire (230), ladite pompe supplémentaire (270), et ladite valve de décharge (280), dans lequel ladite commande est basée sur au moins un paramètre choisi dans un autre groupe comprenant : la température (T) et/ou ladite pression de vapeur dans le récipient de pression (120).
